(19) **Europäisches Patentamt**
**European Patent Office**
**Office européen des brevets**

(11) **EP 2 782 961 B1**

(12) **EUROPEAN PATENT SPECIFICATION**

(45) Date of publication and mention
of the grant of the patent:
**25.09.2019 Bulletin 2019/39**

(21) Application number: **12888289.1**

(22) Date of filing: **18.12.2012**

(51) Int Cl.:
**C08L 23/12** *(2006.01)*      **C08F 10/06** *(2006.01)*
**C08F 8/06** *(2006.01)*

(86) International application number:
**PCT/US2012/070355**

(87) International publication number:
**WO 2014/077859 (22.05.2014 Gazette 2014/21)**

(54) **POLYPROPYLENE WITH LOW FLUID RETENTION**

POLYPROPYLEN MIT GERINGER FLÜSSIGKEITSRETENTION

POLYPROPYLÈNE À FAIBLE RÉTENTION DE FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2011 US 201161578999 P
14.11.2012 US 201213676935**

(43) Date of publication of application:
**01.10.2014 Bulletin 2014/40**

(73) Proprietor: **Fina Technology, Inc.
Houston, TX 77267-4412 (US)**

(72) Inventors:
• **MCLEOD, Michael
Houston, TX 77059-5544 (US)**
• **LOPEZ, Margarito
Pasadena, TX 77504 (US)**

(74) Representative: **Raboin, Jean-Christophe et al
Total Research & Technology Feluy
Zone Industrielle C
7181 Seneffe (BE)**

(56) References cited:
**US-A1- 2010 098 586      US-B1- 6 362 258
US-B2- 6 610 792**

• **SÍRA M ET AL: "Surface modification of
polyethylene and polypropylene in atmospheric
pressure glow discharge; The atmospheric
pressure glow discharge", JOURNAL OF
PHYSICS D: APPLIED PHYSICS, INSTITUTE OF
PHYSICS PUBLISHING LTD, GB, vol. 38, no. 4, 21
February 2005 (2005-02-21), pages 621-627,
XP020083546, ISSN: 0022-3727, DOI:
10.1088/0022-3727/38/4/015**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**CROSS-REFERENCE TO RELATED APPLICATIONS**

Not applicable.

**FIELD**

The present disclosure generally relates to polypropylene and articles made from polypropylene.

**BACKGROUND**

Polypropylene is generally produced using either a metallocene or a Ziegler-Natta (ZN) catalyst system.
Plastics used in certain laboratory and medical equipment must have low fluid retention and other necessary qualities, including clarity, flexibility, radiation resistance, and autoclavability.
Ziegler-Natta produced polypropylene (ZN-PP) can be prone to warpage in the produced articles, due to its having a wider molecular weight distribution than metallocene produced polypropylene (mPP). In a process known in the art to produce the ZN polypropylene with a narrow molecular weight distribution, the polymers are "vis-broken" in a controlled rheological manner by introducing a specific concentration of a peroxide chemical during extrusion. This controlled rheology polypropylene (CR-PP) can lack some of the performance characteristics of metallocene produced polypropylene, particularly fluid retention. Specifically, additive formulations used in mPP polymers do not achieve the same low fluid retention properties when used in CR-PP.

**SUMMARY**

Embodiments of the present disclosure generally include controlled rheology polypropylene (CR-PP) made with from 0.01 to 1.0 wt% of an additive formulation. The CR-PP exhibits low fluid retention.
In one embodiment, either by itself or in combination with other embodiments, the controlled rheology polypropylene is made by co-extruding a Zeigler-Natta produced random copolymer of polypropylene with peroxide. The random copolymer can contain less than 1 wt% ethylene, and can be isotactic. The peroxide can be 3,6,9-triethyl-3,6,9,-trimethyl-1,4,7-triperoxonane.
In one embodiment, either by itself or in combination with other embodiments, the additive formulation contains one or more of the following: compounds for radiation resistance, stabilizers, neutralizers, and clarifiers.
Compounds for radiation resistance can be hindered amine light stabilizers. The CR-PP can contain from 0.05 to 0.15 wt% of compound for radiation resistance.
Stabilizerscomprisediphosphite stabilizers, such as, bis(2,4-dicumylphenyl) pentaerythritol diphosphite. The CR-PP contains from 0.01 to about 0.2 wt% of stabilizer.
Neutralizers comprise stearoyl lactylates, such as calcium stearoyl lactylate. The CR-PP contains from 0.01 to 0.10 wt% of neutralizer.
Clarifiers comprise 1,3,5-Trisamide derivatives, such as N-[3,5-bis-(2,2-dimethyl-propionylamino)-phenyl]-2,2-dimethylpropionamide. The CR-PP contains from 0.01 to 0.25 wt% of clarifier.
According to the invention, either by itself or in combination with other embodiments, the controlled rheology polypropylene contains from 0.05 to 0.15 wt% of a hindered amine light stabilizer, from 0.01 to 0.2 wt% of a diphosphite stabilizer, from 0.01 to 0.1 wt% of a stearoyl lactylate, and from 0.01 to 0.25 wt% of a 1,3,5-Trisamide based clarifier.
In an embodiment, either by itself or in combination with other embodiments, the CR-PP has a MFI of from 30 to 50 g/min and molecular weight distribution of 2.0 to about 7.0 polydispersity units. The CR-PP can also exhibit one or more of the following physical features: clarity, good flexibility, radiation resistance, autoclavability, processability, low plate out, non-animal derived additives, non-acetone extractables, non-fluorescence and centrifuge integrity (stiffness/toughness balance).
In an embodiment, either by itself or in combination with other embodiments, the CR-PP is used to make an article. The article can be a medical grade article selected from pipette tips, centrifuge tubes, reaction vessels, protein assay trays, culture tubes, syringes, petri dishes and combinations thereof. In an embodiment, the article is a pipette tip that retains no fluid after 6 passes of the fluid. In an embodiment, the CR-PP exhibits a contact angle of at least 94°, optionally at least 96°, optionally at least 98°.
In another embodiment, either by itself or in combination with other embodiments, the disclosure is a process of making CR-PP exhibiting low fluid retention. The process can includes the following steps: contacting polypropylene and less than 1 wt % ethylene monomer with a Ziegler-Natta catalyst under suitable reaction conditions to form a polymer; combining the polymer with an additive formulation; and extruding the polymer and the additive formulation in the presence of peroxide. The additive formulation contains additives that are described above. The additive formulation contains from 0.05 to 0.15 wt% of a hindered amine light stabilizer, from 0.01 to 0.2 wt% of a diphosphite stabilizer, from 0.01 to 0.1 wt% of a stearoyl lactylate, and from 0.01 to 0.25 wt% of a 1,3,5-Trisamide based clarifier.

In an embodiment, either by itself or in combination with other embodiments, the process further includes the step of producing an article from the CR-PP. The article can be a medical grade article selected from pipette tips, centrifuge tubes, reaction vessels, protein assay trays, culture tubes, syringes, petri dishes and combinations thereof. In one embodiment, the article is a pipette tip that retains no fluid after 6 passes of the fluid. In an embodiment, the CR-PP exhibits a contact angle of at least 94°, optionally at least 96°, optionally at least 98°.

## BRIEF DESCRIPTION OF DRAWINGS

The present disclosure is best understood from the following detailed description when read with the accompanying figures.

Figure 1 is a photo of a water droplet on a plaque for measurement of water retention.
Figure 2 is an illustration depicting a contact angle on a hydrophilic surface and a hydrophobic surface.
Figure 3 is a graph of relative contact angles for polypropylenes described in the Example.
Figure 4 is a photo of the sapphire standard used as a calibration standard for measurement of contact angles.

## DETAILED DESCRIPTION

The following disclosure provides many different embodiments, or examples, for implementing different features of various embodiments. Specific examples of components and arrangements are described below to simplify the present disclosure. These are, of course, merely examples and are not intended to be limiting.

The present disclosure relates to polypropylene that exhibits low fluid retention and other attributes necessary for use in lab/medical devices and for processes to make such polypropylene.

The polypropylene can be a homopolymer or random copolymer. In an embodiment, either by itself or in combination with other embodiments, the polypropylene is a random copolymer of polypropylene, in which a comonomer is polymerized and randomly distributed in the polypropylene chain. The polypropylene random copolymer can contain from less than 5 wt% of a comonomer, optionally less than 1 wt % of a comonomer. The comonomer can be chosen from the group consisting of $C_2$ to $C_{10}$ olefins. In an embodiment, the comonomer is ethylene.

The polypropylene may display various tacticity. In an embodiment, the polypropylene is isotactic.

The polypropylene can be polymerized using any known catalyst for polypropylene polymerization. In an embodiment, either by itself or in combination with other embodiments, the catalyst is Ziegler-Natta (ZN) catalyst. The Ziegler-Natta catalyst can be any of the conventional ZN catalysts, which are well known in the art. Generally, ZN catalysts comprise a transition metal compound, a support, and a co-catalyst. The transition metal compound can be of the general formula $MR_x$ where M is the metal, R is a halogen or a hydrocarbyloxy and x is the valence of the metal. M can be a Group IVB metal, such as titanium. R can be chlorine, bromine, an alkoxy or a phenoxy. Illustrative examples of the transition metal compounds include $TiCl_4$, $TiBr_4$, $Ti(OC_2H_5)_3Cl$, $Ti(OC_2H_5)_3Cl$, $Ti(OC_3H_7)_2Cl_2$, $Ti(OC_6H_{13})_2Cl_2$, $Ti(OC_2H_5)_2Br_2$ and $Ti(OC_{12}H_{25})Cl_3$. Mixtures of the transition metal compounds may be used. The support can be an inert solid which is chemically unreactive with any of the components of the conventional Ziegler-Natta catalyst. For instance, the support can be a magnesium compound, for example, magnesium halides, dialkoxymagnesiums, alkoxymagnesium halides, dialkylmagnesiums, magnesium oxide, magnesium hydroxide, and carboxylates of magnesium. One example of a transition metal compound and its support is titanium tetrachloride ($TiCl_4$) supported on magnesium dihalide, such as magnesium dichloride or magnesium dibromide. Silica may also be used as a support. The supported catalyst may be employed in conjunction with a co-catalyst or electron donor such as a metal hydride and/or metal alkyl. For instance, the co-catalyst can be an organoaluminum compound, or an alkylaluminum compound, for example, triethylaluminum (TEAl), trimethyl aluminum (TMA) and triisobutyl aluminum (TiBAl). Ziegler-Natta catalyst systems incorporating diethers and succinates may also be used with the disclosure.

The polymerization method can be any of conventional polymerization methods known in the art for the production of polypropylene. Reactor types may include, for example, loop, slurry, solution, gas phase, high pressure processes, continuous stirred tank, or other. Polymerization protocol and reactions conditions, including temperature and pressure, may be determined accordingly. Such polymerizations may be conducted in batch or continuous mode and may take place in one reactor or may be carried out in a series of reactors.

In an embodiment, either by itself or in combination with other embodiments, the polypropylene is a controlled rheology polypropylene (CR-PP), wherein a free radical agent is co-extruded with ZN-PP to degrade, or "vis-break", the polypropylene chains. This process, referred to as controlled rheology or "CR'ing", can increase the polymer's melt flow rate and narrow the molecular weight distribution. The free radical agent can be any known free radical initiator. In an embodiment, the free radical agent is a peroxide, such as 2,2 di(t-amyl) peroxy propane (Lupersol 553 from Lucidol), 3,6,9-triethyl-3,6,9,-trimethyl-1,4,7-triperoxonane (Trigonox 301 from AkzoNobel) or 3,6,6,9,9 pentamethyl-3 n-propyl-1,2,4,5 tetraoxacyclononane (Esperal 529 from Peroxygen Division of Witco Chem.) The free radical agent can be used in the amount of from 50 to 10,000 ppm, optionally from 100 to 5000 ppm, optionally from 500 to 2000 ppm. The organic peroxide can be combined with polypropylene particulates or pellets prior to or during extrusion, and the CR'ing takes place during the process of extrusion. The resultant CR-PP can have a MFI of from 20 to 60 g/min, optionally from 25 to 55 g/min, optionally from 30 to 50 g/min. The CR-PP can also have a narrow molecular weight distribution. As used herein, the term "narrow molecular weight distribution" refers to a molecular weight distribution of from about 1.5 to about 8, or from about 2.0 to about 7.5 or from about 2.0 to about 7.0. CR'ing can also modifies other physical properties of the polymer, such as decrease in tensile strength, decrease in stiffness, increase in impact strength, and decrease in warpage.

In an embodiment, either by itself or in combination with other embodiments, the polypropylene contains one or more additives. The additives can include stabilizers, lubricants, clarifiers, acid neutralizers, additives for radiation resistance, ultraviolet screening agents, oxidants, antioxidants, anti-static agents, ultraviolet light absorbents, fire retardants, anti-blocks, coefficient of friction modifiers, processing oils, mold release agents, coloring agents, pigments, nucleating agents, fillers, and the like. Additives may be suited for the particular needs or desires of a user or maker, and various combinations of the additives may be used.

Depending on the additive or combination of additives used, the additives can be blended with the polypropylene, by dry blending for instance, after polymerization but prior to extrusion. The additives may also be combined with the polymer during the processing phase (pellet extrusion), for example. In one embodiment, the additives which are useful are those that are not surface active additives or that do not migrate to the surface of the polymer or article. The total amount of additive can comprise from 0.001 to 4.0 wt% by, optionally from about 0.01 to about 2.0 wt%, or optionally from about 0.01 to about 1.0 wt%, based on the total weight of the polymer.

In an embodiment, either by itself or in combination with other embodiments, one or more compounds for radiation resistance can be added to the polymer. Laboratory and medical grade articles, which can be formed from the polypropylene of the disclosure, are typically sterilized. Such sterilization for polypropylene articles can involve gamma radiation. Compounds for radiation resistance include the non-phenolic compounds of benzhydrols or derivatives of benzhydrol. Other compounds for radiation resistance include the hindered amine light stabilizer (HALS) compounds, such as the tetraalkyl-piperidene-containing polytriazine compounds, including the derivatives of 2,2,6,6-tetramethylpiperidine, for example butanedioc acid, dimethylester, polymer with 4-hydroxy-2,2,6,6-tetramethyl-1-piperidine ethanol, sold as Tinuvin 622 by Ciba. Other suitable compounds include poly[[6-[(1,1,3,3-tetramethylbutyl)amino]-1,3,5-triazine-2,4-diyl][(2,2,6-,6-tetramethl-4-piperidinyl)imino-1,6-hexanediyl[2,2,6,6-tetramethy1-4-piperidinyl)imino]], which is commercially available as Chimassorb 944, from Ciba, and Univul 5050H sold by BASF. Multiple radiation additives may be used in combination. In an embodiment the total amount of compound for radiation resistance can be from 0.01 to 0.40 wt%, optionally from 0.05 to 0.20 wt%, or optionally from 0.05 to 0.15 wt%, based on the total weight of the polymer.

In an embodiment, either by itself or in combination with other embodiments, one or more stabilizers can be added to the polymer. The stabilizers can help to inhibit oxidation or thermal or ultraviolet light degradation of the end use article. Examples of suitable stabilizers include pentaerythritol tetrakis; tris(2,4-di-tert-butylphenyl)phosphite (sold as Irgafos 168 by Ciba); bis(2,4-dicumylphenyl) pentaerythritol diphosphite (sold as Doverphos 9228 by Dover); 1,3,5-trimethyl-2,4,6-tris(3,5-di-tert-buytl-4-hydroxybenzyl)-benzene (sold as Ethanox 330 by Albemarle); octadecyl-3-(3,5-di-tert.butyl-4-hydroxyphenyl)-propionate (sold as Irganox 1076 by Ciba); synthetic hydrotalcite, such as those with the trade name DHT4A, available from Kyowa Chemical Industries Co.; and combinations thereof. Such compounds can be used in amounts of from about 0.01 to about 0.5 wt%, optionally 0.01 to about 0.4 wt%, optionally 0.01 to about 0.2 wt% based on the total weight of the polymer. Another useful stabilizer is the benzofuran-2-one type compounds.

In an embodiment, either by itself or in combination with other embodiments, one or more neutralizers can be added to the polymer. Neutralizers can be chosen from the group including metal stearates, such as zinc stearate; calcium salts derived from stearic and lactic acids, such as calcium stearoyl lactylate (sold as Pationic 940 by American Ingredients Co.); and calcium pelargonate. In an embodiment neutralizers may be added in the range of from 0.01 to 0.50 wt%, optionally from 0.01 to 0.20 wt%, or optionally from 0.01 to 0.10 wt%, based on the total weight of the polymer.

In an embodiment, either by itself or in combination with other embodiments, one or more clarifiers can be added to the polymer. Clarifiers may also act as nucleating agents. Examples of suitable clarifiers include dibenzylidene sorbitols (CDBS), organophosphate salts, and phosphate esters. Examples of commercially available clarifiers are Millad powdered sorbitols available from Milliken Chemical, such Millad NX8000 and Millad NX8000K; NA-11 and NA-21 phosphate esters available from Asahi Denka Kogyo; NC-4 from Mitsui Chemicals; HPN-68, a norbornane carboxylic-acid salt available from Milliken Chemical; and 1,3,5-Trisamide based clarifiers, such as N-[3,5-bis-(2,2-dimethyl-propionylamino)-phenyl]-2,2-dimethylpropionamide (sold as Irgaclear XT386 by Ciba). Other clarifiers known to one skilled in the art can also be used. Clarifiers may also include inorganic nucleating agents (pulverized clay, silicates, alkali salts, alkaline earth salts, aluminum salts, titanium salts, and metal oxides, for example) and organic nucleating agents, such as 2-mercaptobenzimidazole and 1,3,5-trisamide derivatives. In an embodiment clarifiers may be added in the range of from 0.01 to 0.50 wt%, optionally from 0.01 to 0.30 wt%, or optionally from 0.01 to 0.20 wt%, based on the total weight of the polymer.

Other additives include mobilizing agents such as hydrocarbons, halogenated hydrocarbons, phthalates, polymeric fats, vegetable oils, silicone oils, and the like. The additives can also include melt stabilizers (also called secondary stabilizers), which help to prevent degradation during melt processing. The melt stabilizers may be selected from a variety of commercially available phosphate inhibitors and die lubricants, including, for example, metal stearates, fluoropolymers, and their combinations.

In an embodiment, either by itself or in combination with other embodiments, the disclosure is for an additive formulation to be used with CR-PP to produce a polypropylene having low fluid retention. The blend includes from 0.05 to 0.15 wt% of a compound for radiation resistance, from 0.01 to 0.2 wt% of a stabilizer, from 0.01 to 0.1 wt% of a neutralizer, and from 0.01 to 0.2 wt% of a clarifier. The compound for radiation resistance is a hindered amine light stabilizer, the stabilizer is a diphosphite stabilizer, the neutralizer is a stearoyl lactylate, and the clarifier is a 1,3,5-Trisamide based clarifier.

The CR-PP can be used to make an end use article. In an embodiment, either by itself or in combination with other embodiments, the polymer is used te form a molded article, such as a medical or laboratory grade article. For example, the molded article may include, but is not limited to, a pipette tip, centrifuge tube, reaction vessel, protein assay trays, syringe, petri dish or culture tube. The molded article may be produced using any method known to those of ordinary skill in the art, such as blow molding, compression molding, injection stretch blow molding, etc.

In an embodiment, either by itself or in combination with other embodiments, the article exhibits low fluid retention, in which little or no liquid adheres to the article. Fluid retention can be tested using a water retention test. For instance, if the article is a pipette tip, the water retention test demonstrates the efficiency of the pipette tip to completely dispense all the water from the pipette tip without having any water remaining attached to the inside wall of the tip. The water retention test involves multiple pipetting's of distilled water. The number of pipette passes is defined as the number of times that the distilled water is dispensed from the pipette tip. Each time the water is dispensed from the pipette tip, the pipette tip is visually inspected for fluid retention. For consistency, the pipette tip from the same core in the mold is used for the test. The water retention properties are the same for all pipette sizes and the manner in which the liquid is dispensed from the pipette does not affect the water retention property.

In an embodiment, either by itself or in combination with other embodiments, the CR-PP exhibits low fluid retention properties. Fluid retention properties can be tested using a water contact angle test. In an embodiment, either by itself or in combination with other embodiments, the CR-PP exhibits low water retention properties in which water on a flat plaque of the CR-PP exhibits a contact angle of at least 94°, optionally at least 96°, optionally at least 98°.

In an embodiment, either by itself or in combination with other embodiments, the article is a pipette tip wherein the pipette tip retains only small drops of fluid at the tip of the article after 2 passes of the fluid, or 3 passes, or 4 passes, or 6 passes. Alternatively, the article retains no fluid at the tip of the article after 2 passes of the fluid, or 3 passes, or 4 passes, or 6 passes. In an embodiment, either by itself or in combination with other embodiments, the article passes a water retention test after 6 passes of water. In an embodiment, either by itself or in combination with other embodiments, the article after aging for 6 months passes a water retention test after 6 passes of water.

In an embodiment, either by itself or in combination with other embodiments, the article has desirable physical attributes, including clarity, good flexibility, radiation resistance, autoclavability, processability, low plate out, non-animal derived additives, non-acetone extractables, non-fluorescence and centrifuge integrity (stiffness/toughness balance).

In an embodiment, either by itself or in combination with other embodiments, the article has a haze at 20 mils no greater than 15%, optionally no greater than 11%, optionally no greater than 8%. In an embodiment the article has a haze at 20 mils no greater than 8% and does not fluoresce under UV light.

In an embodiment, either by itself or in combination with other embodiments, the disclosure is a process of making a controlled rheology polypropylene that has low fluid retention, including: contacting polypropylene and less than 1 wt % ethylene monomer with a Ziegler-Natta catalyst under suitable reaction conditions to form a polymer; combining polymer with an additive formulation; and extruding the polymer and additive formulation in the presence of peroxide. The additive formulation contains the following: a hindered amine light stabilizer, a diphosphite stabilizer, a stearoyl lactylate, and a 1,3,5-Trisamide based clarifier. In an embodiment the CR-PP can have a MFI of from 30 to 50 g/min and molecular weight distribution of from about 2.0 to about 7.0.

In an embodiment, either by itself or in combination with other embodiments, the process further includes forming the CR-PP into an article. The article can be a molded article, produced using any conventional process, such as injection molding or blow molding. The article can be a medical or laboratory grade article, such a centrifuge tube or pipette tip, In addition to low fluid retention, the article may also exhibit one or more of the following: clarity, good flexibility, radiation resistance, autoclavability, processability, low plate out, non-animal derived additives, non-acetone extractables, non-fluorescence and centrifuge integrity (stiffness/toughness balance).

The following Example is meant to be merely illustrative of a particular embodiment of the present disclosure, and is by no means limiting of the scope of the disclosure.

Four samples of CR-PP containing different combinations of additives were produced and tested for physical properties. For each sample, a 2.8 to a 3.9 W10 min melt flow rate reactor grade random copolymer polypropylene fluff sample that contained 0.6 wt% ethylene as a co-monomer was CR'ed to a polypropylene with a melt flow rate range of 40 to 50 g/10 min. The peroxide Trigonox 301 was used for the controlled rheology. The following additives were used in one or more of the CR-PP samples: Chimmasorb 944, Tinuvin 622, Irgafos 168, Univul 5050H, Doverphos s-9228T, calcium pelargonate, Pationic 940, Vegetable calcium stearate, Millad NX8000, Millad NX8000K, Irgaclear XT386.

The following table shows the amount of various additives and physical properties for each sample.

Table 1. Additives and physical properties for CR-PP samples.

| Sample | CR-PP A | CR-PP B | CR-PP C | CR-PP D |
|---|---|---|---|---|
| Additives (wt%) | | | | |
| **Radiation Resistance** | | | | |
| Tinuvin 622 | 0.08 | | | 0.06 |
| Chimmasorb 944 | 0.04 | | | 0.03 |
| Univul 5050H | | 0.09 | 0.09 | |
| **Stabilizer** | | | | |
| Irgafos 168 | 0.10 | | | |
| Doverphos S-9228T | | 0.03 | 0.03 | 0.03 |
| **Neutralizer** | | | | |
| Calcium Pelargonate | | | | 0.03 |
| Pationic 940 | | 0.03 | 0.03 | |
| Veg. ZnSt | 0.09 | | | |
| **Clarifier** | | | | |
| NX8000 | 0.19 | | | |
| NX8000K | | | 0.19 | 0.19 |
| Irgaclear XT386 | | 0.02 | | |
| **Total Additives (wt%)** | 0.5 | 0.17 | 0.34 | 0.34 |
| Trigonox 301 (ppm) | 1100 | 1100 | 1100 | 1100 |
| Base Fluff MFR (g/min) | 2.9 | 3.9 | 3.9 | 3.9 |
| Pellet MFR (g/min) | 44.8 | 50.3 | 51.3 | 51 |
| Color Hunter b | -2.84 | -0.43 | -1.91 | -1.85 |
| Color Y.I. | -8.44 | -1.77 | -6.23 | -5.96 |
| % Haze at 20 mils thickness | 9 | 6 | 12 | 12 |
| % Haze at 40 mils thickness | 26 | 15 | 26 | 27 |
| % Haze at 60 mils thickness | 29 | 27 | 35 | 35 |

The four samples were also molded into pipette tips and centrifuge tubes and tested for fluid retention, fluorescence, static buildup, and clarity. The following table shows the results of those tests.

Table 2. Fluid retention and other properties of CR-PP A-D.

| Sample | **CR-PP A** | **CR-PP B** | **CR-PP C** | **CR-PP D** |
|---|---|---|---|---|
| Fluid Retention (10 passes) | Fail | **Pass** | Pass | Pass |
| Fluid Retention after six months (10 passes) | Fail | **Pass** | Fail | Fail |

(continued)

| Sample | CR-PP A | CR-PP B | CR-PP C | CR-PP D |
|---|---|---|---|---|
| Fluorescence | Fail | **Pass** | Fail | Fail |
| Static Buildup | Pass | **Pass** | Pass | Pass |
| Clarity | Good | **Exceptional** | Good | Good |

A sample passed the fluid retention test if it retained no fluid in the pipette tip after at least five passes of fluid. The sample CR-PP B, containing the additives Univul 5050H, Doverphos S9228T, Pationic 940, and Irgaclear XT386, performed the best. It was the only sample to pass the fluid retention test after aging for six months. The Irgaclear XT386 clarifier, formulation CR-PP B, was the only formulation that did not fluoresce under UV light. Sample CR-PP B also passed the requirements for flexibility, radiation resistance, autoclavability, processability, no plate out, non-animal derived additives, non-acetone extractables, and centrifuge integrity. Thus, ZN-PP can be CR'ed and formed with a combination of additives to achieve a polypropylene with low fluid retention and other desired qualities.

A water contact angle test was performed to quantify fluid retention values. Surface energy determines a polymers interaction with a liquid. Surface Energy is the intermolecular bonds or forces between two materials. The first ten angstroms into a surface is where surface energy is determined. It can be measured by contact angles between the fluid and the surface. Contact angle is defined as the behavior of pure water on a surface as a result of tensions between a liquid and solid surrounded by vapor. It usually involves only water, low variability, and can be utilized on several surfaces. With the use of the CAM-PLUS MIRCO contact angle instrument in conjunction with the Hirox Digital Microscope, contact angle was utilized to determine the surface tension values of several polymeric materials. The instrument utilized was a CAM-PLUS MIRCO contact angle setup and a digital microscope. The lens operated on the microscope was a MXG-5040RZ with a AD-5040HS adapter. Contact angle was measured with deionized water.

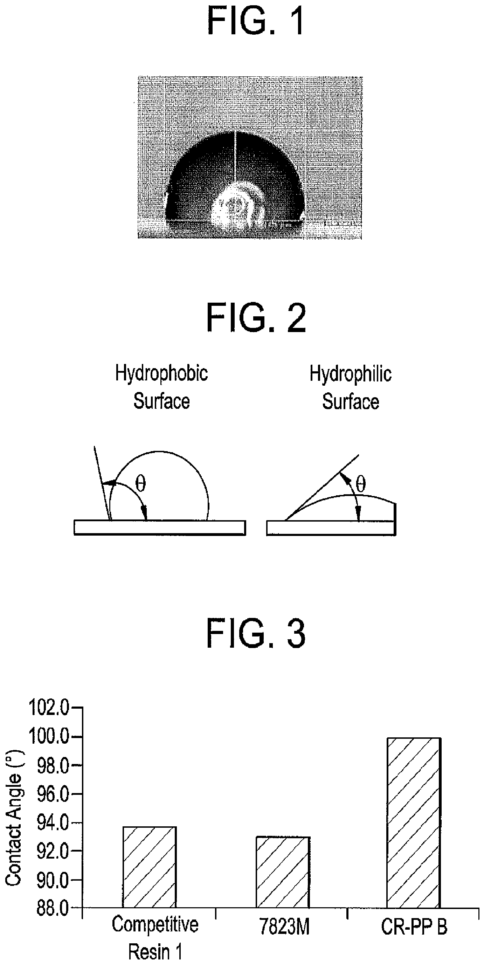

Figure 1 is a photo of a water droplet on a plaque for measurement. Figure 2 illustrates how a low contact angle indicates a hydrophilic surface that would tend to retain fluid on its surface, while a high contact angle indicates a hydrophobic surface that would tend to not retain fluid on its surface and thus have lower fluid retention values.

Samples CR-PP A and CR-PP B along with TOTAL 7823M a commercially available PP available from Total Petrochemicals, Inc. were injected molded into plaques and tested for water contact angle. A higher contact angle indicates a reduced fluid retention property. The CR-PP A had a contact angle of 93.6°, CR-PP B had a contact angle of 100.0°, 7823M had a contact angle of 93.0°. The contact angle measurements showed that CR-PP B exhibited the highest contact angle, which would indicate lower wettability properties. These results are shown in Figure 3.

Contact angle measurement was taken on the top side of plaques and a 15um droplet. The following equation was applied to calculate the contact angle:

$$\theta = 2 \text{ arc tan (H/R)}$$

Where:

$\theta$ = Contact angle
H = height of droplet's image
R = half its width or diameter

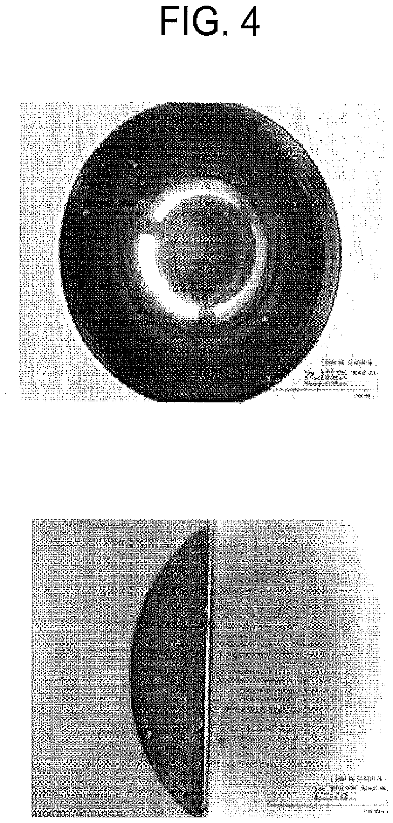

A sapphire standard was used to calibrate the microscope and confirm the measuring technique for contact angle. The sapphire standard was made with a contact angle of 60.0° ± 1. After taking several measurements with the microscope the average was 59.0°. This sapphire standard verified that the technique employed was yielding accurate results. Figure 4 is a photo of the sapphire standard used as a calibration standard.

**Table 1: Sapphire Standard Contact Angle**

| Sapphire Standard (Using AD-5040SS) | | | |
|---|---|---|---|
| Trial | Diameter (microm) | Height (microm) | Contact Angle (°) |
| 1 | 4738 | 1369 | 60.0 |
| 2 | 4724 | 1334 | 58.9 |
| 3 | 4697 | 1323 | 58.8 |

(continued)

| Sapphire Standard (Using AD-5040SS) | | | |
|---|---|---|---|
| Trial | Diameter (microm) | Height (microm) | Contact Angle (°) |
| 4 | 4708 | 1319 | 58.5 |
| 5 | 4712 | 1319 | 58.5 |
| Average | | | 59.0 |

As used herein, the term "autoclavability" refers to a physical property wherein an article is formed from a polymer that is resistant to softening at elevated temperatures during sterilization by autoclaving, commonly at 120°C or higher.

As used herein, the term "low plate out" refers to resistance to plate out. Plate-out occurs when material deposits on the mold (cores, cavities, or vents) during the molding of a part. The residue that deposits onto the mold is also referred to as plate-out. As used herein "low" plate out can refer to a composition exhibiting low or no plate out.

As used herein, the term "radiation resistance" refers to a physical property wherein an article is formed from a polymer that is resistant to gamma radiation or electron beam radiation during sterilization in the presence of oxygen, therefore decreasing the severity of embrittlement and discoloration that normally occurs during and after such sterilization. Accordingly, as used herein, articles exhibiting radiation resistance generally exhibit a resistance (no increased embrittlement or discoloration) to at least 5 mega rads $Co^{60}$ of radiation.

As used herein, the term "water retention test" refers to the efficiency of a pipette tip to completely dispense all the liquid from the pipette tip without having any noticeable liquid remaining attached to the inside wall of the tip. The water retention test involves multiple pipetting of distilled water. The number of pipette passes is defined as the number of times that the distilled water was dispensed from the pipette tip. Each time the water was dispensed from the pipette tip, the pipette tip was visually inspected for water retention. The water retention properties are the same for all pipette sizes. The water can be dispensed from the pipette by any suitable method, such as via gravity drain, air displacement, positive displacement, etc. The manner in which the liquid is dispensed from the pipette does not affect the water retention property.

The various embodiments of the present disclosure can be joined in combination with other embodiments of the disclosure and the listed embodiments herein are not meant to limit the disclosure. All combinations of embodiments of the disclosure are enabled, even if not given in a particular example herein.

The foregoing outlines features of several embodiments so that a person of ordinary skill in the art may better understand the aspects of the present disclosure. Such features may be replaced by any one of numerous equivalent alternatives, only some of which are disclosed herein. One of ordinary skill in the art should appreciate that they may readily use the present disclosure as a basis for designing or modifying other processes and structures for carrying out the same purposes and/or achieving the same advantages of the embodiments introduced herein. One of ordinary skill in the art should also realize that such equivalent constructions do not depart from the spirit and scope of the present disclosure, and that they may make various changes, substitutions and alterations herein without departing from the spirit and scope of the present disclosure.

Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.).

While the foregoing is directed to embodiments, versions and examples of the present disclosure, which are included to enable a person of ordinary skill in the art to make and use the disclosures when the information in this patent is combined with available information and technology, the disclosure is not limited to only these particular embodiments, versions and examples. Also, it is within the scope of this disclosure that the aspects and embodiments disclosed herein are usable and combinable with every other embodiment and/or aspect disclosed herein, and consequently, this disclosure is enabling for any and all combinations of the embodiments and/or aspects disclosed herein. Other and further embodiments, versions and examples of the disclosure may be devised without departing from the basic scope thereof and the scope thereof is determined by the claims that follow.

## Claims

1. A controlled rheology polypropylene comprising an additive formulation, wherein the additive formulation comprises from 0.05 to 0.15 wt% of a radiation resistance compound comprising a hindered amine light stabilizer, from 0.01 to 0.2 wt% of a stabilizer comprising a diphosphite stabilizer, from 0.01 to 0.1 wt% of a neutralizer comprising a stearoyl lactylate, and from 0.01 to 0.25 wt% of a clarifier comprising a 1,3,5-Trisamide based clarifier, based on the weight of the controlled rheology polypropylene, and wherein the controlled rheology polypropylene exhibits low fluid retention, wherein fluid retention is measured by a water contact test in which water of a flat plaque of the controlled rheology polypropylene exhibits a contact angle of at least 94°.

2. The controlled rheology polypropylene of claim 1 made using Ziegler-Natta produced polypropylene and a peroxide.

3. The controlled rheology polypropylene of claim 2, wherein the Ziegler-Natta produced polypropylene is made from a polypropylene random copolymer, which comprises propylene and less than 1 wt% ethylene.

4. The controlled rheology polypropylene of claim 2, wherein the peroxide is 3,6,9-triethyl-3,6,9,-trimethyl-1,4,7-triperoxonane.

5. The controlled rheology polypropylene of claim 1, wherein the melt flow index is from 30 to 50 g/min.

6. The controlled rheology polypropylene of claim 1, wherein the molecular weight distribution is from about 2.0 to about 7.0 polydisperity units.

7. The controlled rheology polypropylene of claim 1, wherein the additive formulation comprises from 0.05 to 0.15 wt% of a hindered amine light stabilizer, from 0.01 to 0.2 wt% of a diphosphite stabilizer, from 0.01 to 0.1 wt% of a stearoyl lactylate, and from 0.01 to 0.25 wt% of a 1,3,5-Trisamide based clarifier, based on the weight of the controlled rheology polypropylene.

8. The controlled rheology polypropylene of claim 1, wherein the additive formulation comprises from 0.05 to 0.12 wt% of a hindered amine light stabilizer, from 0.01 to 0.06 wt% of a diphosphite stabilizer, from 0.01 to 0.06 wt% of a stearoyl lactylate, and from 0.01 to 0.06 wt% of a 1,3,5-Trisamide based clarifier, based on the weight of the controlled rheology polypropylene, wherein the additive formulation comprises no more than 0.30 wt% of the controlled rheology polypropylene and wherein the controlled rheology polypropylene exhibits low plate out, radiation stability, autoclavability, does not fluoresce under UV light, and a has a haze at 20 mils no greater than 8%.

9. An article comprising the controlled rheology polypropylene of claim 1, preferably

- the article exhibits low plate out, radiation stability and autoclavability, and a haze at 20 mils no greater than 15%, or
- the article does not fluoresce under UV light, and a haze at 20 mils no greater than 8%, or
- the article is a medical grade article selected from pipette tips, centrifuge tubes, reaction vessels, protein assay trays, culture tubes, syringes, petri dishes and combinations thereof, or
- the article is a pipette tip that passes a water retention test after 6 passes of water, or
- the article is a pipette tip that has aged for at least 6 months and passes a water retention test after 6 passes of water.

10. The controlled rheology polypropylene of claim 1, having low fluid retention properties in which water on a flat plaque of the polypropylene exhibits a contact angle of at least 98°.

11. A process of making a controlled rheology polypropylene comprising:

contacting polypropylene and less than 1 wt % ethylene monomer with a Ziegler-Natta catalyst under suitable reaction conditions to form a polymer;
combining polymer with 0.01 to 1.0 wt% of an additive formulation, wherein the additive formation comprises from 0.05 to 0.15 wt% of a radiation resistance compound comprising a hindered amine light stabilizer, from 0.01 to 0.2 wt% of a stabilizer comprising a diphosphite stabilizer, from 0.01 to 0.1 wt% of a neutralizer comprising a stearoyl lactylate, and from 0.01 to 0.25 wt% of a clarifier comprising a 1,3,5-Trisamide based clarifier, based on the weight of the controlled rheology polypropylene,
and extruding polymer and the additive formulation in the presence of peroxide.

12. The process of claim 11, wherein the controlled rheology polypropylene has a melt flow index from 30 to 50 g/min and a molecular weight distribution of from about 2.0 to about 7.0 polydispersity units.

**13.** The process of claim 11, further comprising the step of forming the controlled rheology polypropylene into an article, preferably the article:

- exhibits low plate out, radiation stability and autoclavability; or
- is a medical grade article selected from pipette tips, centrifuge tubes, reaction vessels, protein assay trays, culture tubes, syringes, petri dishes and combinations thereof, or
- is a pipette tip that passes a water retention test after 6 passes of water.

**14.** The process of claim 11, further comprising the step of forming the controlled rheology polypropylene into an article, wherein a plaque of the controlled rheology polypropylene exhibits low fluid retention properties in which water on a flat plaque of the polypropylene exhibits a contact angle of at least 94°.

**Patentansprüche**

**1.** Polypropylen mit kontrollierter Rheologie, umfassend eine Additivformulierung, wobei die Additivformulierung 0,05 bis 0,15 Gew.-% einer strahlungsbeständigen Verbindung, die ein sterisch gehindertes Amin als Lichtstabilisator umfasst, 0,01 bis 0,2 Gew.-% eines Stabilisators, der einen Diphosphitstabilisator umfasst, 0,01 bis 0,1 Gew.-% eines Neutralisators, der ein Stearoyllactylat umfasst, und 0,01 bis 0,25 Gew.-% eines Klärmittels, das ein Klärmittel auf 1,3,5-Trisamid-Basis umfasst, bezogen auf das Gewicht des Propylens mit kontrollierter Rheologie umfasst und wobei das Polypropylen mit kontrollierter Rheologie einen niedrigen Flüssigkeitsretentionswert aufweist, wobei die Flüssigkeitsretention durch einen Wasserkontakttest gemessen wird, bei dem Wasser auf einer flachen Platte aus dem Polypropylen mit kontrollierter Rheologie einen Kontaktwinkel von mindestens 94° aufweist.

**2.** Polypropylen mit kontrollierter Rheologie nach Anspruch 1, hergestellt unter Verwendung von durch Ziegler-Natta hergestelltem Polypropylen und einem Peroxid.

**3.** Polypropylen mit kontrollierter Rheologie nach Anspruch 2, wobei das durch Ziegler-Natta hergestellte Polypropylen aus einem statistischen Polypropylencopolymer hergestellt ist, das Propylen und weniger als 1 Gew.-% Ethylen umfasst.

**4.** Polypropylen mit kontrollierter Rheologie nach Anspruch 2, wobei das Peroxid 3,6,9-Triethyl-3,6,9-trimethyl-1,4,7-triperoxonan ist.

**5.** Polypropylen mit kontrollierter Rheologie nach Anspruch 1, wobei der Schmelzflussindex 30 bis 50 g/min beträgt.

**6.** Polypropylen mit kontrollierter Rheologie nach Anspruch 1, wobei die Molekulargewichtsverteilung etwa 2,0 bis etwa 7,0 Polydisperitätseinheiten beträgt.

**7.** Polypropylen mit kontrollierter Rheologie nach Anspruch 1, wobei die Additivformulierung 0,05 bis 0,15 Gew.-% eines sterisch gehinderten Amins als Lichtstabilisator, 0,01 bis 0,2 Gew.-% eines Diphosphitstabilisators, 0,01 bis 0,1 Gew.-% eines Stearoyllactylats und 0,01 bis 0,25 Gew.-% eines Klärmittels auf 1,3,5-Trisamid-Basis bezogen auf das Gewicht des Polypropylens mit kontrollierter Rheologie umfasst.

**8.** Polypropylen mit kontrollierter Rheologie nach Anspruch 1, wobei die Additivformulierung 0,05 bis 0,12 Gew.-% eines sterisch gehinderten Amins als Lichtstabilisator, 0,01 bis 0,06 Gew.-% eines Diphosphitstabilisators, 0,01 bis 0,06 Gew.-% eines Stearoyllactylats und 0,01 bis 0,06 Gew.-% eines Klärmittels auf 1,3,5-Trisamid-Basis bezogen auf das Gewicht des Polypropylens mit kontrollierter Rheologie umfasst, wobei die Additivformulierung nicht mehr als 0,30 Gew.-% des Polypropylens mit kontrollierter Rheologie umfasst und wobei das Polypropylen mit kontrollierter Rheologie geringe(s) Plate-out, Strahlungsstabilität, Autoklavierbarkeit aufweist, nicht unter UV-Licht fluoresziert und eine Trübung bei 20 mm von nicht mehr als 8 % aufweist.

**9.** Gegenstand, der das Polypropylen mit kontrollierter Rheologie nach Anspruch 1 umfasst, wobei vorzugsweise

- der Gegenstand geringe(s) Plate-out, Strahlungsstabilität und Autoklavierbarkeit und eine Trübung bei 20 mm von nicht mehr als 15 % aufweist oder
- der Gegenstand unter UV-Licht nicht fluoresziert und eine Trübung bei 20 mm von nicht mehr als 8 % aufweist oder

- der Gegenstand von medizinischer Qualität ist und aus Pipettenspitzen, Zentrifugenröhrchen, Reaktionsgefäßen, Proteinassay-Schalen, Kulturröhrchen, Spritzen, Petrischalen und Kombinationen davon ausgewählt ist, oder
- der Artikel eine Pipettenspitze ist, die nach 6 Wasserdurchläufen einen Wasserrückhaltetest besteht, oder
- der Gegenstand eine Pipettenspitze ist, die mindestens 6 Monate lang gealtert wurde und nach 6 Wasserdurchläufen einen Wasserrückhaltetest besteht.

10. Polypropylen mit kontrollierter Rheologie nach Anspruch 1, das geringe Flüssigkeitsrückhalteeigenschaften aufweist, bei denen Wasser auf einer flachen Platte aus dem Polypropylen einen Kontaktwinkel von mindestens 98° aufweist.

11. Verfahren zur Herstellung eines Polypropylens mit kontrollierter Rheologie, umfassend:

Kontaktieren von Polypropylen und weniger als 1 Gew.-% Ethylenmonomer mit einem Ziegler-Natta-Katalysator unter geeigneten Reaktionsbedingungen, um ein Polymer zu bilden;
Kombinieren des Polymers mit 0,01 bis 1,0 Gew.-% einer Additivformulierung, wobei die Additivformulierung 0,05 bis 0,15 Gew.-% einer strahlungsbeständigen Verbindung, die ein sterisch gehindertes Amin als Lichtstabilisator umfasst, 0,01 bis 0,2 Gew.-% eines Stabilisators, der einen Diphosphitstabilisator umfasst, 0,01 bis 0,1 Gew.-% eines Neutralisators, der ein Stearoyllactylat umfasst, und 0,01 bis 0,25 Gew.-% eines Klärmittels, das ein Klärmittel auf 1,3,5-Trisamid-Basis umfasst, bezogen auf das Gewicht des Polypropylens mit kontrollierter Rheologie umfasst, und Extrudieren des Polymers und der Additivformulierung in Gegenwart von Peroxid.

12. Verfahren nach Anspruch 11, wobei das Polypropylen mit kontrollierter Rheologie einen Schmelzflussindex von 30 bis 50 g/min und eine Molekulargewichtsverteilung von etwa 2,0 bis etwa 7,0 Polydispersitätseinheiten aufweist.

13. Verfahren nach Anspruch 11, ferner umfassend den Schritt des Formens des Polypropylens mit kontrollierter Rheologie zu einem Gegenstand, wobei der Gegenstand vorzugsweise

- geringe(s) Plate-out, Strahlungsstabilität und Autoklavierbarkeit aufweist; oder
- ein Gegenstand von medizinischer Qualität ist, der aus Pipettenspitzen, Zentrifugenröhrchen, Reaktionsgefäßen, Proteinassay-Schalen, Kulturröhrchen, Spritzen, Petrischalen und Kombinationen davon ausgewählt ist, oder
- eine Pipettenspitze ist, die nach 6 Wasserdurchläufen einen Wasserrückhaltetest besteht.

14. Verfahren nach Anspruch 11, ferner umfassend den Schritt des Formens des Polypropylens mit kontrollierter Rheologie zu einem Gegenstand, wobei eine Platte aus Polypropylen mit kontrollierter Rheologie geringe Flüssigkeitsrückhalteeigenschaften aufweist, wobei Wasser auf einer flachen Platte aus dem Polypropylen einen Kontaktwinkel von mindestens 94° aufweist.

**Revendications**

1. Polypropylène à rhéologie contrôlée comprenant une formule d'additif, la formule d'additif comprenant entre 0,05 et 0,15% en poids d'un composé résistant aux rayonnements comprenant une amine à encombrement stérique, entre 0,01 et 0,2 % en poids d'un stabilisant comprenant un stabilisant de type diphosphite, entre 0,01 et 0,1 % en poids d'un neutralisant comprenant un lactylate de stéaroyle et entre 0,01 et 0,25 % en poids d'un clarifiant comprenant un clarifiant à base de 1,3,5-trisamide, par rapport au poids du polypropylène à rhéologie contrôlée, et le polypropylène à rhéologie contrôlée présentant une faible rétention de fluide, la rétention de fluide étant mesurée par un test de contact avec l'eau dans lequel l'eau d'une plaque plate du polypropylène à rhéologie contrôlée présente un angle de contact d'au moins 94°.

2. Polypropylène à rhéologie contrôlée selon la revendication 1 fabriqué à partir d'un polypropylène au moyen du procédé Ziegler Natta et un peroxyde.

3. Polypropylène à rhéologie contrôlée selon la revendication 2, le polypropylène produit selon le procédé Ziegler-Natta étant fabriqué à partir d'un copolymère aléatoire de polypropylène, qui comprend du propylène et moins de 1 % en poids d'éthylène.

**4.** Polypropylène à rhéologie contrôlée selon la revendication 2, le péroxyde étant du 3,6,9-triéthyl-3,6,9-triméthyl-1,4,7-tripéroxonane.

**5.** Polypropylène à rhéologie contrôlée selon la revendication 1, l'indice de fluidité en volume à l'état fondu étant compris entre 30 et 50 g/min.

**6.** Polypropylène à rhéologie contrôlée selon la revendication 1, la distribution du point moléculaire étant comprise entre environ 2,0 et environ 7,0 unités de polydispersité.

**7.** Polypropylène à rhéologie contrôlée selon la revendication 1, la formule d'additif comprenant entre 0,05 et 0,15 % en poids d'une amine à encombrement stérique, entre 0,01 et 0,2 % en poids d'un stabilisant de type diphosphite, entre 0,01 et 0,1 % en poids d'un lactylate de stéaroyle et entre 0,01 et 0,25 % en poids d'un clarifiant à base de 1,3,5-trisamide, par rapport au poids du polypropylène à rhéologie contrôlée.

**8.** Polypropylène à rhéologie contrôlée selon la revendication 1, la formule d'additif comprenant entre 0,05 et 0,12 % en poids d'une amine à encombrement stérique, entre 0,01 et 0,06 % en poids d'un stabilisant de type diphosphite, entre 0,01 et 0,06 % en poids d'un lactylate de stéaroyle, et entre 0,01 et 0,06 % en poids d'un clarifiant à base de 1,3,5-trisamide, par rapport au poids du polypropylène à rhéologie contrôlée, la formule d'additif ne comprenant pas plus de 0,30 % en poids du polypropylène à rhéologie contrôlée et le polypropylène à rhéologie contrôlée présentant un faible plate-out, une stabilité aux rayonnements et une capacité de traitement à l'autoclave, ne fluoresçant pas à la lumière ultraviolette et présentant un trouble à 20 mils ne dépassant pas 8 %.

**9.** Article comprenant le polypropylène à rhéologie contrôlée selon la revendication 1, préférentiellement

- l'article présentant un faible plate-out, une stabilité aux rayonnements et une capacité de traitement à l'autoclave et un trouble à 20 mils ne dépassant pas 15 %, ou
- l'article ne fluoresçant pas à la lumière ultraviolette et présentant un trouble à 20 mils ne dépassant pas 8 %, ou
- l'article étant de qualité médicale choisi parmi les embouts de pipette, les tubes à centrifuger, les récipients de réaction, les plateaux de dosage de protéines, les tubes de culture, les seringues, les boîtes de Pétri et leurs combinaisons, ou
- l'article étant un embout de pipette qui réussit un test de rétention d'eau après 6 passages d'eau, ou
- l'article étant un embout de pipette qui a vieilli pendant au moins 6 mois et qui réussit un test de rétention d'eau après 6 passages d'eau.

**10.** Polypropylène à rhéologie contrôlée selon la revendication 1, ayant de faibles propriétés de rétention de fluide, l'eau sur une plaque plate du polypropylène présentant un angle de contact d'au moins 98°.

**11.** Procédé de fabrication d'un polypropylène à rhéologie contrôlée consistant à :

mettre en en contact du polypropylène et moins de 1 % en poids de monomère d'éthylène avec un catalyseur Ziegler-Natta dans des conditions de réaction appropriées pour former un polymère ;
Mélanger du polymère avec entre 0,01 à 1,0 % en poids d'une formule d'additif, la formule d'additif comprenant entre 0,05 et 0,15 % en poids d'un composé résistant aux rayonnements comprenant une amine à encombrement stérique, entre 0,01 et 0,2 % en poids d'un stabilisant comprenant un stabilisant de type diphosphite, entre 0,01 et 0,1 % en poids d'un neutralisant comprenant un lactylate de stéaroyle, et entre 0,01 et 0,25 % en poids d'un clarifiant comprenant un clarifiant à base de 1,3,5-trisamide, par rapport au poids du polypropylène à rhéologie contrôlée,
et extruder le polymère et la formule d'additif en présence de péroxyde.

**12.** Procédé selon la revendication 11, le polypropylène à rhéologie contrôlée présentant un indice de fluidité en volume à l'état fondu compris entre 30 et 50 g/min et une distribution de masse moléculaire comprise entre environ 2,0 et environ 7,0 unités de polydispersité.

**13.** Procédé selon la revendication 11, comprenant en outre l'étape consistant à former le polypropylène à rhéologie contrôlée en un article, préférentiellement l'article :

- présentant un faible plate-out, une stabilité aux rayonnements et une capacité de traitement à l'autoclave ; ou
- Étant un article de qualité médicale choisi parmi les embouts de pipette, les tubes à centrifuger, les récipients de réaction, les plateaux de dosage de protéines, les tubes de culture, les seringues, les boîtes de Pétri et leurs combinaisons, ou
- Étant un embout de pipette qui réussit un test de rétention d'eau après 6 passages d'eau.

14. Procédé selon la revendication 11, comprenant en outre l'étape consistant à former le polypropylène à rhéologie contrôlée en un article, une plaque du polypropylène à rhéologie contrôlée présentant de faibles propriétés de rétention de fluide, l'eau sur une plaque plate du polypropylène présentant un angle de contact d'au moins 94°.

# FIG. 1

# FIG. 2

Hydrophobic
Surface

Hydrophilic
Surface

# FIG. 3

# FIG. 4